Europäisches Patentamt

European Patent Office

Office européen des brevets

(11) Publication number: **0 366 496**
**A2**

# EUROPEAN PATENT APPLICATION

(21) Application number: **89311136.9**

(22) Date of filing: **27.10.89**

(51) Int. Cl.5: **H01L 41/08**

(30) Priority: **27.10.88 JP 271387/88**

(43) Date of publication of application:
**02.05.90 Bulletin 90/18**

(84) Designated Contracting States:
**CH DE FR GB LI**

(71) Applicant: **SEIKO INSTRUMENTS INC.**
**31-1, Kameido 6-chome Koto-ku**
**Tokyo 136(JP)**

(72) Inventor: **Hirotomi, Jun Seiko Instruments Inc.**
**31-1 Kameido 6-chome Koto-ku**
**Tokyo(JP)**

(74) Representative: **Caro, William Egerton et al**
**J. MILLER & CO. Lincoln House 296-302 High**
**Holborn**
**London WC1V 7JH(GB)**

(54) **Ultra-sonic motor driving circuit.**

(57) An ultra-sonic motor driving circuit for driving an ultra-sonic motor of the type wherein a progressive wave or standing wave is excited on the surface of a flexible member by applying a frequency voltage to a piezo-electric device (1) of an oscillation member and drives a moving member which is brought into pressure contact with said oscillation member, comprises: a resistor (2) for converting current flowing through the piezo-electric device (1) to a voltage signal; a reference voltage generator (4) for generating a reference voltage (Vref); a rectifying amplifier (5) connected to the resistor (2) for rectifying and amplifying the voltage signal; a voltage control oscillator (6) for generating a frequency signal (Fout) in accordance with the output of the rectifying amplifier (5); a frequency divider (7) for frequency dividing the output signal of the voltage controlled oscillator (6); a phase distributor (8) for advancing or delaying the phase of the signal of the frequency divider (7); and a booster (9) connected to the phase distributor (8) for amplifying signals (CK1, CK2) of the phase distributor for application to the piezo-electric device (1).

## FIG.1

# ULTRA-SONIC MOTOR DRIVING CIRCUIT

This invention relates to ultra-sonic motor driving circuits. An ultra-sonic motor driving circuit applies a frequency voltage to a piezo-electric device to excite a progressive wave therein and drive frictionally a moving member in pressure contact with the piezo-electric device.

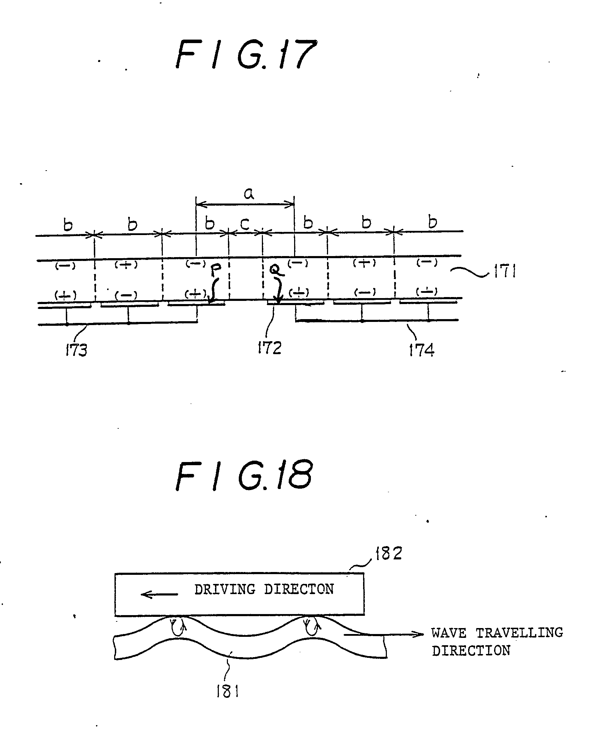

The driving principle of an ultra-sonic motor will be explained with reference to Figure 17, which shows an example of the principle of generation of the progressive wave referred to above. Reference numeral 171 represents a piezo-electric device which is polarised equi-distantly with a width $\underline{b}$, the adjacent polarisation directions being mutually opposite. Electrodes 172 are formed by applying a conductive material such as silver to the piezo-electric device using a technique such as vacuum deposition or plating. One group of electrodes 172 are inter-connected by a signal line 173, and a second group of electrodes are inter-connected by a signal line 174, the two groups of electrodes being driven by different signal sources. A centre portion of the piezo-electric device having a width C is disposed between the groups of electrodes. There is, therefore, a distance $\underline{a}$ between the centres of the two electrodes adjacent to the centre portion C of the piezo-electric device.

It will be assumed that this centre portion may or may not be polarised. The mechanism of generation of the progressive wave will now be explained. A bend oscillation wave consisting of a progressive wave and a backward wave (having an opposite direction of travel to that of the progressive wave) can be expressed by the following equation with reference to a portion P of the piezo-electric device of Figure 17:

$A\sin(\omega t - Kx) + A\sin(\omega t + Kx)$ · (1)

Equation (1) represents a so called "steady wave". In contrast, the bend oscillation wave due to a portion Q of the piezo-electric device can be expressed as follows:-

$$B\sin(\omega t - K(x + a) + \emptyset) + B\sin(\omega t + K(x + a) + \emptyset) \qquad (2)$$

where $K = \omega/\gamma = 2\pi/\lambda$

] $\lambda$: one wavelength

$\emptyset$: phase difference angle with respect to portion P of the piezo-electric device.

If the following relations are established:

$-Ka + \emptyset = \alpha\pi$

$Ka + \emptyset = \beta\pi$ (3)

then, equation (2) can be expressed as:

$B\sin(\omega t - Kx + \alpha\pi) + B\sin(\omega t + Kx + \beta\pi)$ (4)

Therefore, the bend oscillation wave excited by the portions P and Q of the piezo-electric device is the sum of equations (1) and (4).

If the condition which permits the existence of only the progressive wave is considered from the expansion of equation (4), it can be seen that such a condition exists in the case where $\alpha$ is an even numbered multiple of 1/2 and $\beta$ is an odd numbered multiple of 1/2.

From equation (3), $\underline{a}$ and $\emptyset$ can be expressed as follows:-

$a = \lambda/4(\beta - \alpha)$

$\emptyset = \pi/2(\alpha + \beta)$ (5)

In other words, when $(\alpha, \beta) = (0, 1)$, $(2, 3)$, $\underline{a} = \lambda/4$, $\emptyset = \pi/2$ and when $(\alpha, \beta) = (2, 1)$, $\underline{a} = 3/4 \lambda$, $\emptyset = 3/2 \pi$, and when a and $\emptyset$ are satisfied simultaneously, there exists the progressive wave. For instance, in the case where $a = 3/4 \lambda$, $b = \lambda/2$ and $\emptyset = 3/2\pi$ is considered, equations (1) + (2) become:

$A\sin(\omega t - Kx) + A\sin(\omega t - Kx) + B\sin(\omega t - Kx) - B\sin(\omega t + Kx)$ (6)

If the amplitudes A and B of both signals outputted from an ultra-sonic motor driving circuit are A = B, it can be understood that equation (6) becomes $2A\sin(\omega t - Kx)$ and only the progressive wave component remains. To attain reverse driving, only the backward wave exists. Therefore, $\alpha$ and $\beta$ in equation (5) must be reversed so that $\alpha$ is an odd numbered multiple of 1/2 and $\beta$ is an even numbered multiple of 1/2. On the basis of portion P of the piezo-electric device, in practice the phase of the signal applied to the portion Q may deviate by $180°$ in comparison with the case of normal driving.

Figure 18 shows the principle of rotation by the progressive wave. Reference numeral 181 represents a stator or an oscillation member. When the progressive wave occurs on the basis of the principle shown in Figure 17, one point on the surface describes an elliptical orbit in a leftward direction so that a moving member 182 moves in a direction opposite to the travelling direction of the progressive wave. How the point on the surface describes the elliptical orbit is described in "Nikkei Mechanical" (September 23, 1985) and further explanation will be omitted.

The amplitude of the frequency of the oscillation of the oscillation member is a maximum at the mechanical resonance frequency of the oscillation member and a driving force sufficient to drive the moving member can first be achieved by applying this resonance frequency (or frequency voltage approximate thereto) to the piezo-electric device. It has been customary to measure the resonance frequency of the oscillation member by use of, for example, a fast Fourier transformation (FFT) analyser or the like and then to impress a frequency matched with the resonance frequency on the piezo-electric device to drive the moving member.

The resonance frequency of an ultra-sonic motor changes in accordance with ambient temperature or with temperature change resulting from energy loss of the oscillation member itself. Since the moving member is brought into pressure contact with the oscillation member, the resonance frequency also changes with the force of contact. Furthermore, the resonance frequency changes with the frequency of the voltage applied to the piezo-electric device.

If the frequency of the voltage applied to the piezo-electric device is fixed as in the prior art, the driving force drops drastically and the ultra-sonic motor stops if the resonance frequency of the piezo-electric device changes.

The present invention seeks to provide an ultra-sonic motor driving circuit which stably drives an ultra-sonic motor when the temperature of an oscillation member, an applied frequency voltage and/or contact pressure between the oscillation member and the moving member changes.

The present invention also seeks to provide an ultra-sonic motor driving circuit which matches the frequency of the voltage applied to a piezo-electric device with the resonance frequency of the ultra-sonic motor to maintain at all times application of a frequency near the resonance frequency of the ultra-sonic motor to the piezo-electric device.

According to one aspect of the present invention there is provided an ultra-sonic motor driving circuit for driving an ultra-sonic motor of the type wherein a progressive wave or standing wave is excited on the surface of a flexible member by applying a frequency voltage to a piezo-electric device of an oscillation member and drives a moving member which is brought into pressure contact with said oscillation member, said driving circuit being characterised by comprising: a resistor for converting current flowing through said piezo-electric device to a voltage signal; reference voltage generating means for generating a reference voltage; rectifying amplifier means connected to said resistor for rectifying and amplifying said voltage signal; voltage control oscillation means for generating a frequency signal in accordance with the output of said rectifying amplifier means; frequency division means for frequency dividing the output signal of said oscillation means; phase distribution means for advancing or delaying the phase of the signal of said frequency division means; and booster means connected to said phase distribution means for amplifying signals of said phase distribution means for application to the piezo-electric device.

Preferably said reference voltage generation means includes first voltage generation means for generating a voltage in accordance with a driving voltage of the piezo-electric device.

Said reference voltage generation means may include second voltage generation means for generating a voltage in accordance with ambient temperature. Said second voltage generation means may have a temperature sensor.

In one embodiment said reference voltage generation means includes voltage control means for changing the reference voltage in accordance with an output voltage from the first and/or second voltage generation means.

Said reference voltage generation means preferably includes means for generating a voltage which is higher than a controlled voltage of said voltage control oscillation means so that the difference between the voltage generated by the reference voltage generation means and the control voltage is smaller than a predetermined value. In operation, said predetermined value may be proportional to the maximum consumed current of the ultra-sonic motor.

According to a further aspect of the present invention there is provided an ultra-sonic motor comprising: an oscillation member including a flexible member and a piezo-electric device bonded thereto for generating a progressive wave or standing wave on the surface of said oscillation member; a moving member which is brought into pressure contact with said oscillation member; and a driving circuit for applying a frequency voltage to said piezo-electric device, said driving circuit being characterised by a resistor for converting current flowing through said piezo-electric device to a voltage signal; voltage control oscillation means connected to receive said voltage signal for generating a frequency signal in accordance therewith; and drive signal generating means coupled to said oscillation means for generating a driving signal from the frequency signal for application to the piezo-electric device.

The invention is illustrated, merely by way of example, in the accompanying drawings, in which:-

Figure 1 is a block diagram of an embodiment of an ultra-sonic motor driving circuit according to the present invention;

Figure 2 is a circuit diagram of a half wave rectifying amplifier of the driving circuit of Figure 1;

Figure 3 is a circuit diagram showing a reference voltage generator of the driving circuit of Figure 1;

Figure 4 is a circuit diagram of a voltage controlled oscillator having a negative gradient forming part of the driving circuit of Figure 1;

Figure 5 is a circuit diagram of a booster of the driving circuit of Figure 1;

Figure 6 is a diagram showing the relation between the voltage of the voltage controlled oscillator of Figure 4 and frequency;

Figure 7 is a timing chart showing the voltage waveform of an output signal of the half wave rectifying amplifier of Figure 2;

Figure 8 is a diagram showing the relation between the driving frequency of an ultra-sonic motor and consumed current and number of revolutions of a moving member;

Figure 9 is a timing chart showing the change of reference potential after a re-set signal changes from 1 to 0 in Figure 3;

Figure 10 is a diagram showing the relation between temperature and the resonance frequency of an ultra-sonic motor;

Figure 11 is a diagram showing the relation between driving voltage of an ultra-sonic motor and consumed current;

Figure 12 is a circuit diagram showing a voltage controlled oscillator having a positive gradient and suitable for use in an ultra-sonic motor driving circuit according to the present invention;

Figure 13 is a diagram showing the relation between the voltage and the voltage controlled oscillator of Figure 12 and frequency;

Figure 14 is a circuit diagram showing a reference voltage generator for use with the voltage controlled oscillator of Figure 13;

Figure 15 is a timing chart showing change of a reference voltage after a re-set signal changes from 1 to 0 in Figure 14;

Figure 16 is a circuit diagram of a half wave rectifying amplifier for use with the voltage controlled oscillator of Figure 13;

Figure 17 is a diagram illustrating the principle of generation of a progressive wave in an ultra-sonic motor; and

Figure 18 is an explanatory view illustrating the principle of rotation of a progressive wave in an ultra-sonic motor.

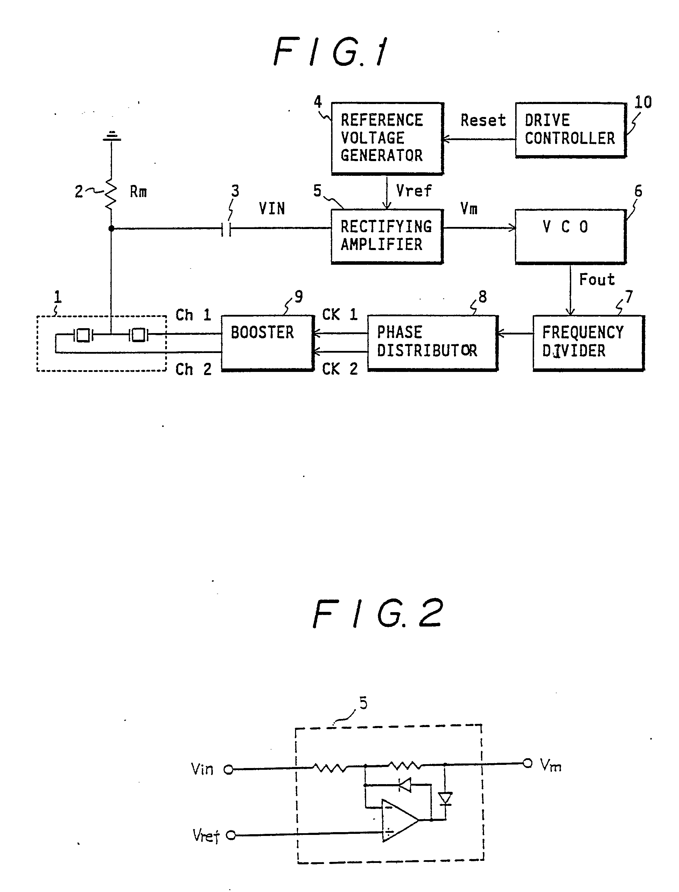

Figure 1 shows an embodiment of an ultra-sonic motor driving circuit according to the present invention. In Figure 1 an ultra-sonic motor is constituted by a piezo-electric device 1. A common electrode of the piezo-electric device is grounded through a resistor 2. When an oscillating voltage is applied to the piezo-electric device 1 from a booster 9, current flows through the resistor 2. When the current flows through the resistor 2, a voltage difference occurs across it.

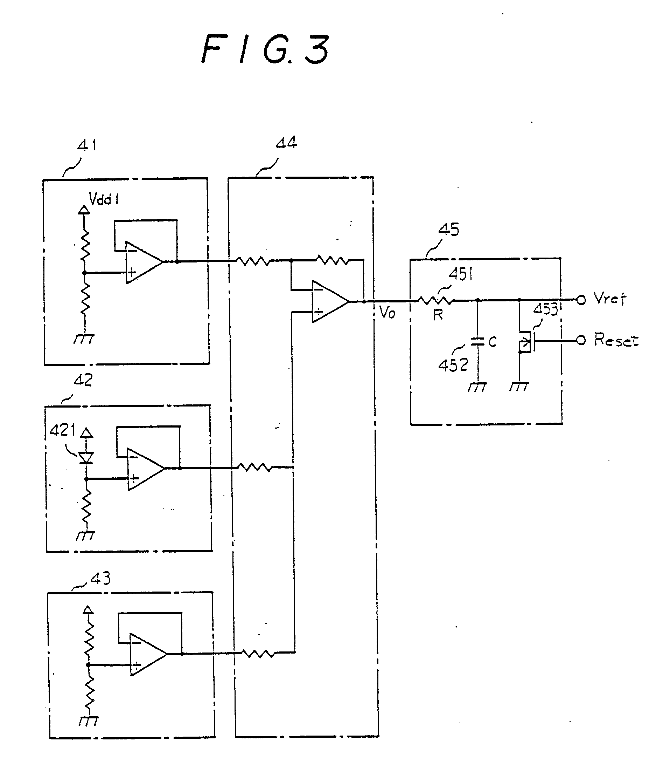

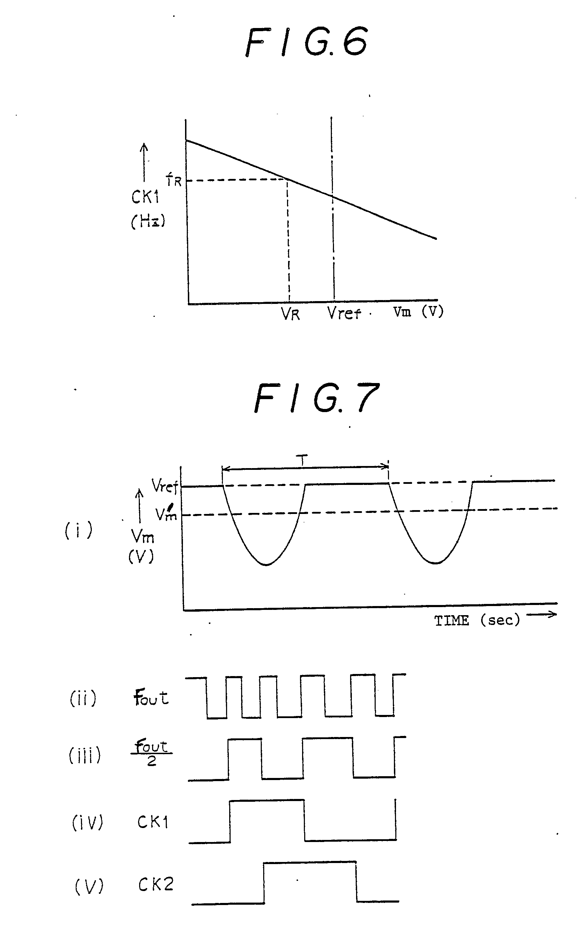

The voltage difference is given by $i.Rm$ with $i$ representing the current and $Rm$ representing the resistance of the resistor 2. A voltage signal proportional to the current $i$ is thus inputted into a rectifying amplifier 5 through a coupling capacitor 3 and is rectified and amplified. An embodiment of the rectifying amplifier 5 is shown in Figure 2. The waveform of a rectified and amplified voltage Vm produced by the rectifying amplifier 5 of Figure 2 is shown in Figure 7 (i). A reference voltage Vref is applied to the rectifying amplifier 5 from a reference voltage generator 4. An embodiment of the reference voltage generator is shown in detail in Figure 3. The reference voltage generator comprises a first voltage generator 41 for generating a voltage in accordance with a driving voltage Vdd 1 of an ultra-sonic motor, a second voltage generator 42 for generating a voltage in accordance with ambient temperature and has a temperature sensor 421, a third voltage generator 43 capable of setting an arbitrary voltage, an addition/ subtraction circuit 44 for adding or subtracting the first, second and third voltages from each other and a voltage control circuit 45 coupled to the addition/ subtraction circuit for changing the reference voltage Vref in accordance with an output voltage Vo of the addition/subtraction circuit. The voltage control circuit 41 includes an output switch circuit 453 which is responsive to a re-set signal Reset from a driving controller 10 (Figure 1).

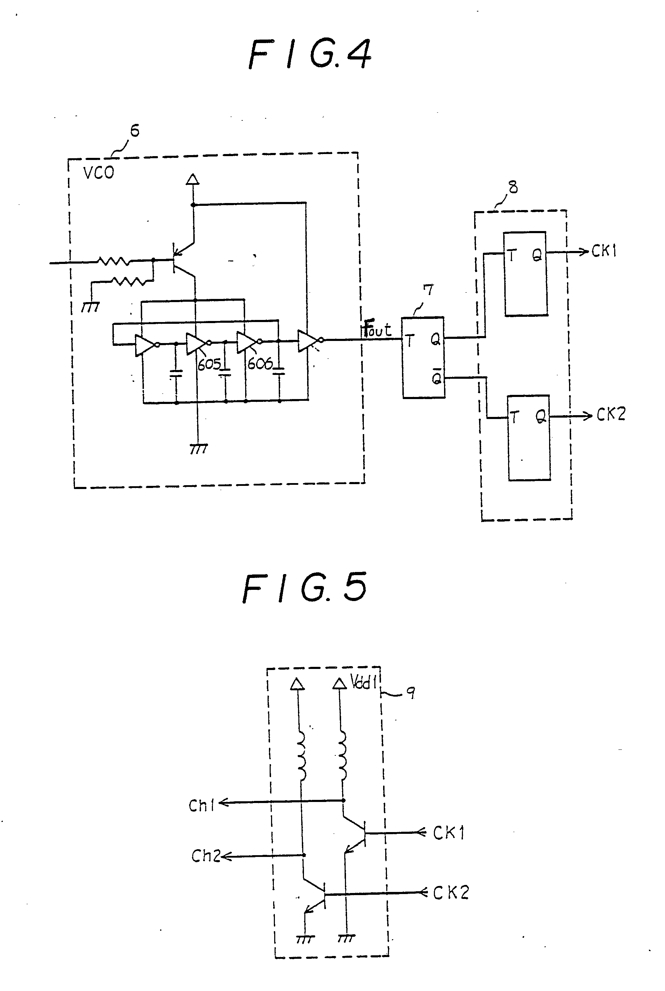

The voltage Vm produced by the rectifying amplifier 5 is applied as a frequency control voltage to a voltage controlled oscillator (VCO) 6. The voltage Vm is an AC voltage but the mean output frequency of an output signal Fout of the VCO 6 corresponds substantially to a mean voltage V'm (Figure 7 (ii)) of the voltage Vm. A frequency divider 7 divides the frequency of the output signal Fout of the VCO 6. Upon receiving an output signal from the frequency divider 7, a phase distributor 8 generates two signals CK1, CK2 one of which is either advanced or delayed by 1/4 period with respect to the other. Figure 4 shows an embodiment of the VCO 6, the frequency divider 7 and the phase distributor 8 in detail.

The booster 9 receives the two signals CK1, CK2 from the phase distributor 8, raises the voltage thereof and produces signals Ch1, Ch2 respectively which are applied to the piezo-electric element 1. The booster 9 is shown in detail in Figure 5.

Figure 6 is a diagram showing the relation between the voltage Vm applied to the VCO 6 and the output frequency of the signal CK1 after frequency division by the frequency divider 7. Figure 6 also shows the resonance frequency $f_R$ of the ultra-sonic motor corresponding to an impressed resonance voltage $V_R$ of the VCO and a reference potential Vref 1 set by the reference potential generator 4.

The relation of Figure 6 may be expressed as follows:

CK1 = aVm + b (Hz)

a: gradient co-efficient

b: frequency when Vm = 0 V.     (A)

The current from the ultra-sonic motor flowing through the resistor 2 is an AC signal and the voltage Vm obtained by rectifying and amplifying this signal is also an AC signal as shown in Figure 7 (i). If this voltage Vm is directly inputted to the VCO, the frequency of the output signal Fout is matched with the value of the voltage signal Vm as shown in Figure 7 (ii). The waveform shown in Figure 7 (iii) is obtained by dividing the frequency of the output signal Fout by 1/2 and signals CK1 and CK2 shown in Figure 7 (iv) and (v) respectively are obtained by further dividing the frequency of the signal shown in Figure 7 (iii).

If the voltage-frequency characteristics of the VCO 6 are expressed by a linear expression, the frequency of the signals CK1, CK2 is the same as when the voltage Vm is applied as in the form of AC, even when the mean voltage $V'm$ obtained by smoothing the voltage Vm is also applied.

In other words, equation (A) can be expressed as follows with the mean voltage $V'm$ representing the smoothed voltage Vm:

CK1 = a$V'm$ + b     (B)

The change of amplitude of the voltage Vm with current consumed by the ultra-sonic motor and the mean voltage $V'm$ can be expressed as follows:

$$V'm \quad = \quad Vref \quad - \quad \frac{I.Rm.A}{\pi} \qquad \ldots (C)$$

where I: current consumed by the ultra-sonic motor

RM: resistance of the resistor 2

A: degree of amplification of rectifying amplifier 5.

The following equation (D) can be obtained from equations (B) and (C):

$$CK1 \quad = \quad a(Vref \quad - \quad \frac{I.R.A.}{\pi}) \quad + \quad b \qquad \ldots (D)$$

$$\frac{I.R.A.}{\pi}$$

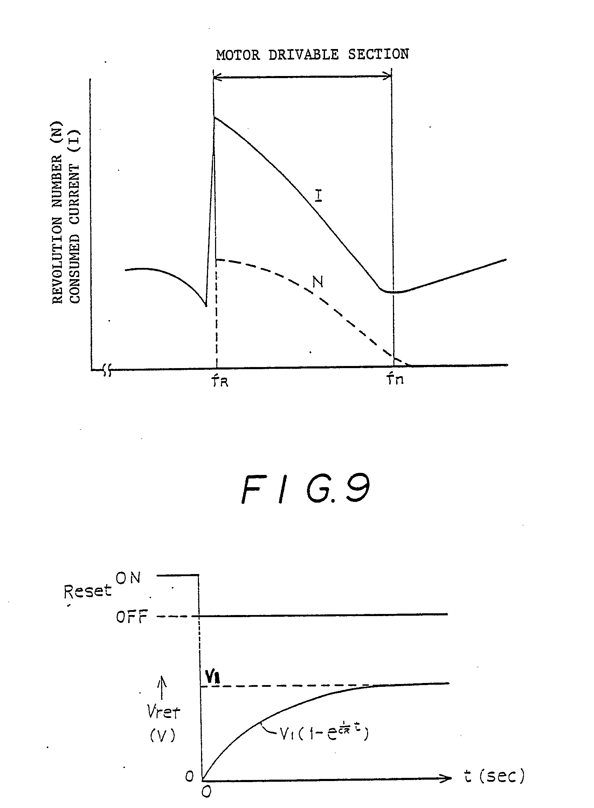

is a feedback term proportional to the increase or decrease of the consumed current I. Figure 8 shows the relation between the driving frequency of the ultra-sonic motor and the consumed current I and the number of revolutions of the moving member. The motor is capable of being driven in the section from $f_R$ to $f_n$. At a frequency more than $f_n$ and less than $f_R$, the motor cannot be driven. The number of revolutions and consumed current becomes a maximum at the resonance frequency $f_R$.

When the signal Reset (Figure 4) changes from 0 to 1, the reference voltage Vref rises gradually from 0 V to a voltage V1 with a time constant CR determined by the resistance R of a resistor 451 and the capacitance C of a capacitor 452 forming part of the voltage control circuit 45, as shown in Figure 9. The frequency of the signal CK1 of the VCO 6 falls gradually in accordance with this change and come near to the resonance frequency $f_R$, and the current I flowing through the piezo-electric device 1 of the ultra-sonic motor increases also. When the current I increases the fall of the signals CK1, CK2 becomes smaller due to equation (D). Here, if the following equation (E) is satisfied with Imax being the maximum value of the current I, the signals CK1, CK2 stabilise at a frequency slightly higher than the resonance frequency $f_R$:

Vref - $V_R$ ≦ Imax.R.$\frac{A}{\pi}$     (E)

The signal CKI must be larger than or equal to the resonance frequency $f_r$ to drive the moving member (see Figure 8):

$$CK1 \geq f_R \text{----------} \quad (F)$$

Equation (G) can be obtained by putting the equations (B) and (C) into equation (F):

$$a\left(Vref - \frac{I.R.A.}{\pi}\right) + b \geq aV_R + b \text{ ---} \quad \ldots (G)$$

Equation H can be obtained by modifying equation (G):

$$Vref \leq V_R + \frac{I.R.A.}{\pi} \text{ -------} \quad \ldots (H)$$

To drive the moving member stably, the following equation must be satisfied:

$$V1 \leq V_R + \frac{I.R.A.}{\pi} \text{ --------} \quad \ldots (I)$$

The maximum value of the

$$\frac{I.R.A.}{\pi}$$

is $Imax.R.\frac{A}{\pi}$ and thus:

$$V1 \leq V_R + Imax.R.\frac{A}{\pi} \text{ -------} \quad (J)$$

On the other hand, from equation (C):

$$V1 \geq V_R \text{ -----------------} \quad (K)$$

Thus, Vo must satisfy the following formula:

$$V_R \leq V1 \leq V_R + Imax.R.\frac{A}{\pi} \text{ --} \quad (L)$$

Accordingly, if the reference voltage Vref is set to a level higher than the resonance voltage $V_R$ so that the value Vref - $V_R$ does not exceed $Imax.R.\frac{A}{\pi}$, the frequency of the signals CK1, CK2 becomes stable near the resonance frequency of the piezo-electric device.

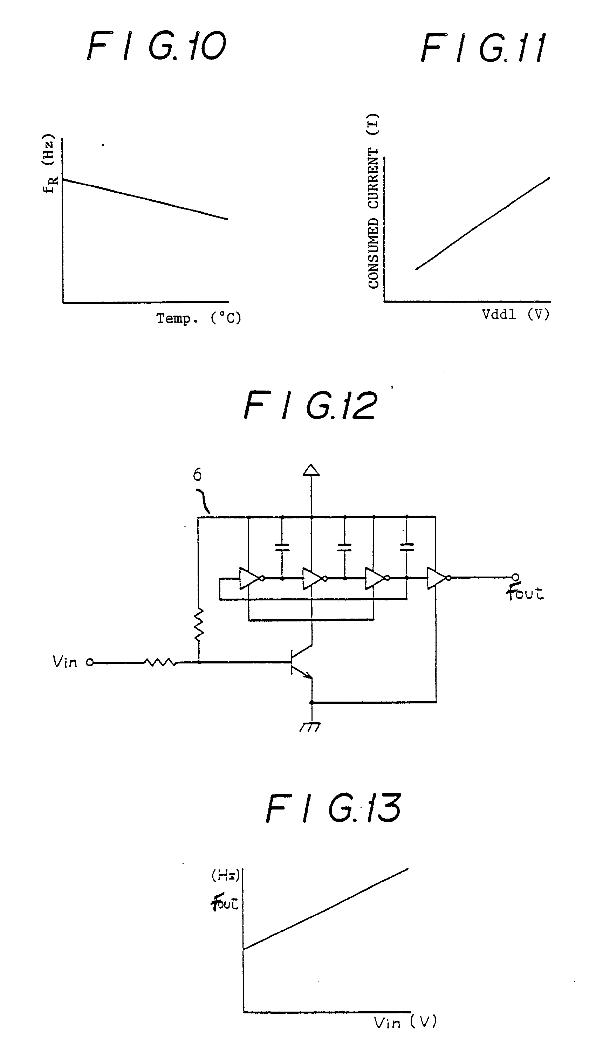

When ambient temperature changes, the resonance frequency $f_R$ changes as shown in Figure 10. The change of the resonance frequency $f_R$ means change of the resonance voltage $V_R$ and if the reference voltage Vref and the maximum value Imax of the current I are constant, Vref - $V_R$ changes also, so that the relation of equation (E) cannot always be satisfied. Therefore, the second voltage generator 42 generates a voltage corresponding to the temperature determined by the temperature sensor 41 and this is used to vary the reference voltage Vref as shown in Figure 3. Accordingly, the reference voltage Vref follows the change of resonance voltage $V_R$ as a result of temperature change and the relation of equation (E) can be maintained.

When the voltage Vdd 1 (Figure 5) applied to the ultra-sonic motor changes, the resonance frequency $f_R$ and the maximum value Imax of the current I changes also, as shown in Figure 11. Thus, the relation of equation (E) cannot always be satisfied due to change of the voltage Vdd 1. However, the first voltage generator 41 for generating a predetermined voltage in accordance with the value of the voltage Vdd 1 is shown in Figure 3 so as to change the reference voltage Vref in accordance with the value of the voltage Vdd 1. Accordingly, the relation of equation (E) can be maintained.

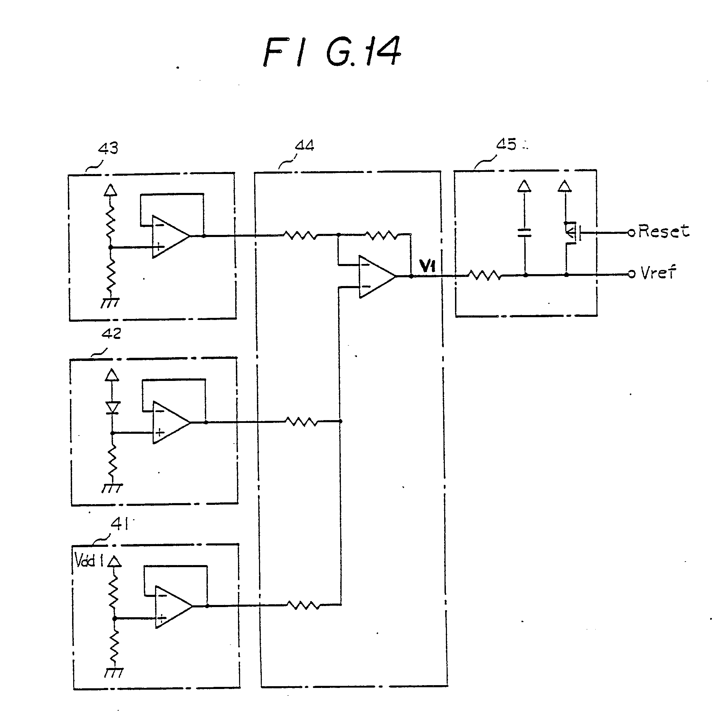

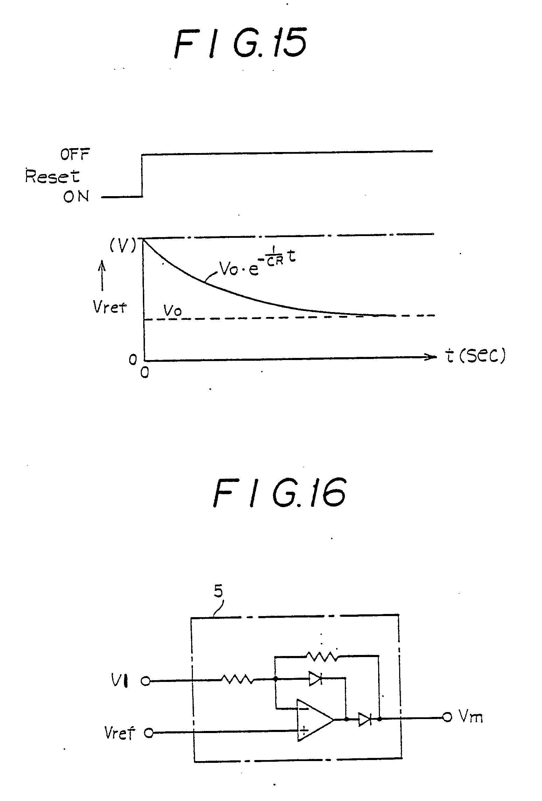

The invention has been described with reference to an embodiment where the VCO 6 has voltage-frequency characteristics with a negative gradient. However, the same operation can also be attained when they have a positive gradient. An example of such a VCO is shown in Figure 12 and its characteristics are shown in Figure 13. An example of a reference voltage generator and a half wave rectifying amplifier for use with such a VCO are shown in Figure 14 and Figure 16 respectively.

In the illustrated embodiment of the present invention, when the ultra-sonic motor is driven, the driving

6

frequency of the piezo-electric device is changed in accordance with change of the resonance frequency due to change of temperature and the driving voltage, and the driving frequency is always set near the resonance frequency so the ultra-sonic motor is driven efficiently.

## Claims

1. An ultra-sonic motor driving circuit for driving an ultra-sonic motor of the type wherein a progressive wave or standing wave is excited on the surface of a flexible member by applying a frequency voltage to a piezo-electric device (1) of an oscillation member and drives a moving member which is brought into pressure contact with said oscillation member, said driving circuit being characterised by comprising: a resistor (2) for converting current flowing through said piezo-electric device (1) to a voltage signal; reference voltage generating means (4) for generating a reference voltage (Vref); rectifying amplifier means (5) connected to said resistor (2) for rectifying and amplifying said voltage signal; voltage control oscillation means (6) for generating a frequency signal (Fout) in accordance with the output of said rectifying amplifier means (5); frequency division means (7) for frequency dividing the output signal of said oscillation means (6); phase distribution means (8) for advancing or delaying the phase of the signal of said frequency division means (7); and booster means (9) connected to said phase distribution means (8) for amplifying signals (CK1, CK2) of said phase distribution means for application to the piezo-electric device (1).

2. An ultra-sonic motor driving circuit as claimed in claim 1 characterised in that said reference voltage generation means (4) includes first voltage generation means (41) for generating a voltage in accordance with a driving voltage of the piezo-electric device.

3. An ultra-sonic motor driving circuit as claimed in claim 1 or 2, characterised in that said reference voltage generation means (4) includes second voltage generation means (42) for generating a voltage in accordance with ambient temperature.

4. An ultra-sonic motor driving circuit as claimed in claim 3 characterised in that said second voltage generation means has a temperature sensor (421).

5. An ultra-sonic motor driving circuit as claimed in any of claims 2 to 4 characterised in that said reference voltage generation means (4) includes voltage control means (45) for changing the reference voltage in accordance with an output voltage from the first and/or second voltage generation means (41, 42).

6. An ultra-sonic motor driving circuit as claimed in any preceding claim characterised in that said reference voltage generation means (4) includes means for generating a voltage which is higher than a controlled voltage of said voltage control oscillation means (6) so that the difference between the voltage generated by the reference voltage generation means and the control voltage is smaller than a predetermined value.

7. An ultra-sonic motor driving circuit as claimed in claim 6 characterised in that in operation said predetermined value is proportional to the maximum consumed current of the ultra-sonic motor.

8. An ultra-sonic motor comprising: an oscillation member including a flexible member and a piezo-electric device (1) bonded thereto for generating a progressive wave or standing wave on the surface of said oscillation member; a moving member which is brought into pressure contact with said oscillation member; and a driving circuit for applying a frequency voltage to said piezo-electric device (1), said driving circuit being characterised by a resistor (2) for converting current flowing through said piezo-electric device (1) to a voltage signal; voltage control oscillation means (6) connected to receive said voltage signal for generating a frequency signal in accordance therewith; and drive signal generating means (7, 8, 9) coupled to said oscillation means for generating a driving signal from the frequency signal for application to the piezo-electric device.

9. An ultra-sonic motor as claimed in claim 8 characterised in that said drive signal generating mean (7, 8, 9) includes frequency division means (7) for frequency dividing the output signal of said oscillation means (6), phase distribution means (8) for advancing or delaying phase of the signal of said frequency division means, and booster means (9) connected to said phase distribution means (8) for amplifying signals of said phase distribution means for application to the piezo-electric device (1).

10. An ultra-sonic motor as claimed in claim 8 or 9 characterised by comprising a reference voltage generating means (4) for generating a reference voltage, and rectifying amplifier means (5) connected to said resistor means (2) for rectifying and amplifying the voltage signal.

11. An ultra-sonic motor as claimed in claim 9 or claim 10 characterised in that said reference voltage generation means (4) includes first voltage generation means (41) for generating a voltage in accordance with a driving voltage of the piezo-electric device (1).

12. An ultra-sonic motor as claimed in claim 10 or 11 characterised in that said reference voltage generation means (4) includes second voltage generation means (42) for generating a voltage in accordance with ambient temperature.

13. An ultra-sonic motor as claimed in claim 12 characterised in that said second voltage generation means (42) has a temperature sensor (421).

14. An ultra-sonic motor as claimed in any of claims 11 to 13 characterised in that said reference voltage generation means (4) includes voltage control means (45) for changing the reference voltage in accordance with an output voltage from the first and/or second voltage generation means (41, 42).

15. An ultra-sonic motor as claimed in any preceding claim characterised in that said reference voltage generation means (4) includes means for generating a voltage which is higher than a controlled voltage of said voltage control oscillation means (6) so that the difference between the voltage generated by the reference voltage generation means and the control voltage is smaller than a predetermined value.

16. An ultra-sonic motor as claimed in claim 15 characterised in that, in operation, said predetermined value is proportional to the maximum consumed current of the ultra-sonic motor.

# F I G. 1

REFERENCE VOLTAGE GENERATOR — 4

Reset

DRIVE CONTROLLER — 10

Vref

2 ~ Rm

3 — VIN

5 — RECTIFYING AMPLIFIER

Vm

6 — V C O

Fout

1

Ch 1

9 — BOOSTER

Ch 2

CK 1

CK 2

8 — PHASE DISTRIBUTOR

7 — FREQUENCY DIVIDER

# F I G. 2

5

Vin ○

○ Vm

Vref ○

# F I G. 3

# F I G. 4

# F I G. 5

# F I G.6

# F I G.7

MOTOR DRIVABLE SECTION

REVOLUTION NUMBER (N)
CONSUMED CURRENT (I)

I

N

$f_R$        $f_n$

# F I G.9

Reset  ON

OFF

$V_1$

$V_{ret}$
(V)

$V_1(1-e^{\frac{1}{cR}t})$

0

0

t (sec)

# F I G.10

$f_R$ (Hz)

Temp. (°C)

# F I G.11

CONSUMED CURRENT (I)

Vdd1 (V)

# F I G.12

6

Vin

$f_{out}$

# F I G.13

(Hz)

$f_{out}$

Vin (V)

F I G.14

# F I G.15

# F I G.16

# F I G.17

# F I G.18